# EUROPEAN PATENT SPECIFICATION

(11) **EP 0 537 886 B1**
(45) Date of publication and mention of the grant of the patent: **09.10.1996**
(21) Application number: 92307343.1
(22) Date of filing: 11.08.1992
(51) Int. Cl.: G02B 6/04

(54) **A process for the production of an optical fiber bundle having heat resistance and vacuum resistance**
Verfahren zur Herstellung eines wärme- und vakuumbeständigen Glasfaser-Bündels
Procédé pour la production d'un faisceau de fibres optiques résistant à la chaleur et au vide

(30) Priority: 18.10.1991 JP 271132/91
(43) Date of publication of application: 21.04.1993
(73) Proprietor: SUMITA OPTICAL GLASS, INC., Chiyoda-ku Tokyo (JP)
(72) Inventor: Baba, Nobuyoshi, Nangoumura, Fukushima (JP); Moriya, Koji, Tajima-machi, Fukushima (JP); Nagahama, Shinobu, Kasukabe-shi, Saitama (JP); Yamauchi, Junya, Tajima-machi, Fukushima (JP)
(74) Representative: Baverstock, Michael George Douglas

(56) References cited:
- GB-A- 2 191 873
- US-A- 3 681 164
- PATENT ABSTRACTS OF JAPAN vol. 4, no. 90 (P-17)1980
- PATENT ABSTRACTS OF JAPAN vol. 6, no. 112 (P-124)1982
- PATENT ABSTRACTS OF JAPAN vol. 4, no. 107 (P-21)1980

## Description

This invention relates to a process for the production of an optical fiber bundle for heat resistance and vacuum resistance which can be used even at a very high temperature or high vacuum.

Using optical fiber filaments each having a core part and clad part, a number of these filaments are uniformly bundled for transmission of light to prepare image guides or light guides in such a manner that the optical axes are properly arranged. These devices have wide application and are used in endoscopes for medical treatment, illumination means in narrow spaces, light monitors, optical sensors, etc., which are important individual optical parts of optical devices, apparatus and other precision devices and apparatus. As such optical fiber bundles, there are used those respectively composed of a fixed part at the end part and a flexible part at the middle part.

The fixed part of the end part is usually formed by fixing with organic or inorganic adhesives, for example, by methods using organic adhesives as disclosed in Japanese Patent Laid-Open Publications Nos. 111908/1980 and 262105/1985 and using inorganic adhesives, in particular, glasses as indicated in Japanese Patent Laid-Open Publications Nos. 65907/1980 and 114804/1989.

However, adhesives for fixing the end part of the optical fiber bundle, of the prior art, are not suitable for use at a higher temperature, since the heat resistance temperature of organic adhesives, for example, epoxy resin type adhesives is about 150°C and that of polyimide resin type adhesives is about 300°C, as disclosed in the above described publications. Furthermore, even in use for vacuum resistance, the use of organic adhesives results in a problem that voids or pores are formed by the adhesive reaction process of the resin which lowers gas tightness and during evacuation, a gas is generated which lengthens the evacuation time.

When using inorganic adhesives, in particular, glasses, the gas tightness at bonded parts is good and no gas is generated, so that adhesives of this type can well be applied to uses needing vacuum resistance. However, since the glass used as an adhesive is a low melting point glass, there arises the problem that the heat resistance temperature is also only about 300°C, similar to organic adhesives and these adhesives cannot be used at a higher temperature.

To meet the problem of heat resistance, there has been proposed a method comprising using a quartz-type optical fiber as an optical fiber filament and an organic binder, in which an inorganic component is dissolved, as the adhesive, thereby raising the heat resistance temperature employed to a very high temperature, e.g. 800°C.

However, this method also has the disadvantage that since in a bonding process, the organic component is removed by a heat treatment after the bonding, voids are also formed as when using resin adhesives, which lowers the gas tightness and decreases the bonding strength, and thus the bonded parts are brittle. In addition, owing to the use of quartz-type optical fiber as the optical fiber filament, the production cost is very high.

Furthermore, as to a method comprising using a glass as an adhesive as disclosed in the above described laid-open publication, it has been known to immerse the end of an optical fiber bundle in a low melting point glass, thus effecting fusion bonding. In this method, however, a large quantity of glass adheres to the end of the optical fiber bundle, expands and immediately solidifies, so that it is very difficult to draw the optical fiber bundle in, for example, a metallic tube for fixing the end part.

GB-A-2 191 873 also describes the preparation of a heat resistant fiber bundle which is obtained by fusing a bonding glass on to the end of the bundle.

The present invention however solves the above-mentioned problems of the prior art.

The present invention provides a process for the production of an optical fiber bundle for heat resistance and vacuum resistance, having both gas tightness and heat resistance, at high temperatures, at the end of the optical fiber bundle.

The present invention also provides a method of bonding the end of an optical fiber bundle with a bonding glass.

The above advantages can be attained by a process for the production of an optical fiber bundle which comprises making optical fiber filaments each having a core part and a clad part into a bundle and fusing a bonding glass on to the end of the bundle characterized in that said optical fiber filaments consist of a glass composition having a glass transition temperature (Tg) exceeding 500°C, and a glass softening temperature (Ts) exceeding 700°C, and said bonding glass has a sag temperature (At) of at least 400°C, the bonding glass being fusion-bonded at a temperature of at most 700°C and the fusion-bonded bonding glass being subjected to a crystallization treatment at a temperature of 500 to 700°C.

The accompanying drawings illustrate the principle and merits of the present invention in detail. In the drawings:

Fig. 1 is a schematic view of the order of steps of one embodiment of the present invention.

Fig. 2 is a schematic view of the order of steps of another embodiment of the present invention.

In the present invention, the above described fusion bonding with a bonding glass is usually carried out by placing the bonding glass on the upward projecting end of the optical fiber bundle, heating the fiber bundle in this state and thereby diffusing and permeating the bonding glass through the optical fiber bundle.

In the present invention, the optical fiber filament having a core part and a clad part preferably consists of a glass composition having a glass transition temperature (Tg) higher than 500°C and a softening temperature (Ts) higher than 700°C.

As the above described bonding glass in the present invention, there can preferably be used a glass composition which is fusion-bonded at a temperature of at most 700°C and well crystallized at a temperature of 500 to 700°C, and which has a sag temperature (At) of at least 400°C.

The specific glass composition of the bonding glass having the above described characteristics comprises 20.0 to 30.0 weight % of TeO₂, 12.0 to 30.0 weight % of Bi₂O₃, 13.0 to 23.0 weight % of GeO₂, 15.0 to 35.0 weight % of PbO, 0 to 12.0 weight % of La₂O₃ and 0 to 20.0 weight % of Nb₂O₅, provided that the sum of the amounts of La₂O₃ and Nb₂O₅ is in the range of 5.0 to 20..0 weight %, in which a part of the above described components can be replaced by at least one oxide component selected from Li, Na, K, Cs, Mg, Ca, Zn, Sr, Ba, Ti, Y, Zr, Ga, In, Sn, Sb, Tl, As, Al, Gd, Yb, Ta, W and P oxides in a range such that the glass composition is fusion-bonded at a temperature of at most 700°C and well crystallized at a temperature of 500 to 700°C, and has a glass sag temperature (At) of at least 400°C.

It has been found that an optical fiber bundle for heat resistance and vacuum resistance, bonded gas-tightly and free from voids or pores, can be obtained by using an optical fiber bundle which is free from deformation at the fusion-bonding temperature and can be used at a high temperature, e.g. 500°C, fusion-bonding the optical fiber bundle with a bonding glass which can be fusion-bonded at a temperature of at most 700°C, used at a temperature of 500°C and sufficiently permeated through the optical fiber bundle and then subjecting to crystallization.

As the optical fiber filament having a core part and a clad part, there is used a glass having a glass transition temperature (Tg) of higher than 500°C and a glass softening temperature (Ts) of exceeding 700°C. This glass, having a glass transition temperature of higher than 500°C, can be protected from softening and deforming even at 500°C and can resist use at high temperature, e.g. 500°C for a long time. Since the fusion-bonding temperature of the bonding glass in the present invention does not exceed 700°C, an optical fiber filament, having a softening temperature (Ts) exceeding 700°C, is not softened and deformed during the fusion-bonding.

In the present invention, any optical fiber filament capable of satisfying the above described properties can be used, for example, consisting of predominantly SiO₂ type glass, SiO₂-B₂O₃ type glass, GeO₂ type glass, P₂O₅ type glass further with several kinds of modifying oxides.

As the bonding glass characteristic of the present invention, there is used a glass that can be well fusion-bonded at a temperature of at most 700°C to suppress deformation of optical fibers at the bonding temperature and that has a sag temperature (At) of at least 400°C to achieve a heat resistance at 500°C. The reason for this is that the heat resistance temperature of a glass ordinarily called "crystallized glass" is limited to a maximum treatment temperature during the crystallizing treatment. In the present invention, a bonding glass crystallizing well at a temperature exceeding 500°C is used.

Since if the sag temperature (At) of the bonding glass is lower than 400°C, the crystallization treatment temperature is lower than 500°C, a glass having a sag temperature of at least 400°C should be used.

Generally, an optical fiber having core and clad parts predominantly consists of a SiO₂ type or SiO₂-B₂O₃ type glass composition, so when using a bonding glass of the same glass composition type, the optical fiber and bonding glass are fused into one during bonding and the bonding glass is difficult to permeate. As the composition of the bonding glass in the present invention, a TeO₂ type glass having enriched permeability and fusion-bonding properties in an optical fiber bundle is preferred and in particular, a composition as exemplified below is preferred.

Specifically, such a glass has a composition comprising 20.0 to 30.0 weight % of TeO₂, 12.0 to 30.0 weight % of Bi₂O₃, 13.0 to 23.0 weight % of GeO₂, 15.0 to 35.0 weight % of PbO, 0 to 12 weight % of La₂O₃ and 0 to 20.0 weight % of Nb₂O₃ (La₂O₃ + Nb₂O₅ = 5.0 to 20.0 weight %). In this composition, the reasons for limiting the scopes of the components are as follows:

TeO₂ is a characteristic component as the bonding glass of the present invention and functions to increase the permeability and fusion-bonding properties during the bonding treatment of an optical fiber of SiO₂ type of SiO₂-B₂O₃ type and to comprise the network of the glass. The amount of this component is preferably in the above described range, since if less than 20.0 weight % is present the glass is very unstable, while if more than 30.0 weight % is present, the desired thermal property cannot be attained.

Bi₂O₃ is a component for making a glass network similar to TeO₂ and an effective component for lowering the melting point of the glass. However, if the amount of Bi₂O₃ is less than 12.0 weight %, the glass is unstable, while of more than 30.0 weight %, the sag temperature (At) of the glass is lowered. Thus, the above described range is preferable.

GeO₂ is a component for composing a glass network with TeO₂ and Bi₂O₃. The amount of this component is preferably in the above described range, since if less than 13.0 weight % is present, the glass is unstable, while if more than 23.0 weight % is present, the chemical durability deteriorates.

PbO is an effective component for lowering the melting point of the glass. The amount of this component is preferably in the above described range, since if less than 15.0 weight % is present, the effect thereof is too small, while if more than 35.0 weight % is present, the permeability and fusion-bonding properties during the bonding treatment deteriorates.

La₂O₃ is an effective component for improving the chemical durability of the glass and raising the crystallization treatment temperature. However, if its amount is more than 12.0 weight %, a glass is not obtained.

Nb₂O₅ has similar properties to La₂O₃. If the amount of it is more than 12.0 weight %, a glass is not obtained.

However, the sum of La₂O₃ + Nb₂O₅ should be 5.0 to 20.0 weight %, since if there is less than 5.0 weight %, a sag temperature of at least 400°C cannot be obtained, while if more than 20.0 weight % is present, a glass cannot be obtained.

A part of the above described components can be replaced with at least one oxide selected from oxides of Li, Na, K, Cs, Mg, Ca, Zn, Sr, Ba, Ti, Y, Zr, Ga, In, Sn, Tl, As, Al, Gd, Yb, Ta, W and P in such a range that fusion-bonding takes place at a temperature of at most 700°C, good crystallization takes place at a temperature of 500 to 700°C and the sag temperature (At) is at least 400°C.

In the present invention, an optical fiber bundle of optical fiber filaments is fusion-bonded with a bonding glass, as described above, and then the bonding glass is subjected to crystallization. Thus, the advantage can be obtained that heat resistance at high temperature is given by not only fusion-bonding but also crystallizing to a fusion-bonded part having attained only a heat resistance up to the glass transition temperature (Tg) as it stands as glass. That is, in the present invention, a heat resistance at a high temperature, e.g. 100°C higher than the glass transition temperature (Tg) of the bonding glass is given by a crystallization treatment.

The fusion-bonding in the present invention should preferably be carried out at a temperature of at most 700°C so as to prevent the optical fiber bundle from softening and deforming. As a specific means, there is proposed a method comprising placing a bonding glass on an optical fiber bundle, heating them in this state from the outside and utilizing permeation of the bonding glass through the optical fiber bundle by its weight.

Furthermore, the crystallization in the present invention should preferably be carried out at a temperature of 500 to 700°C so as to give a heat resistance at 500°C and to prevent the optical fiber bundle from softening and deforming, at which the bonding glass is optionally crystallized.

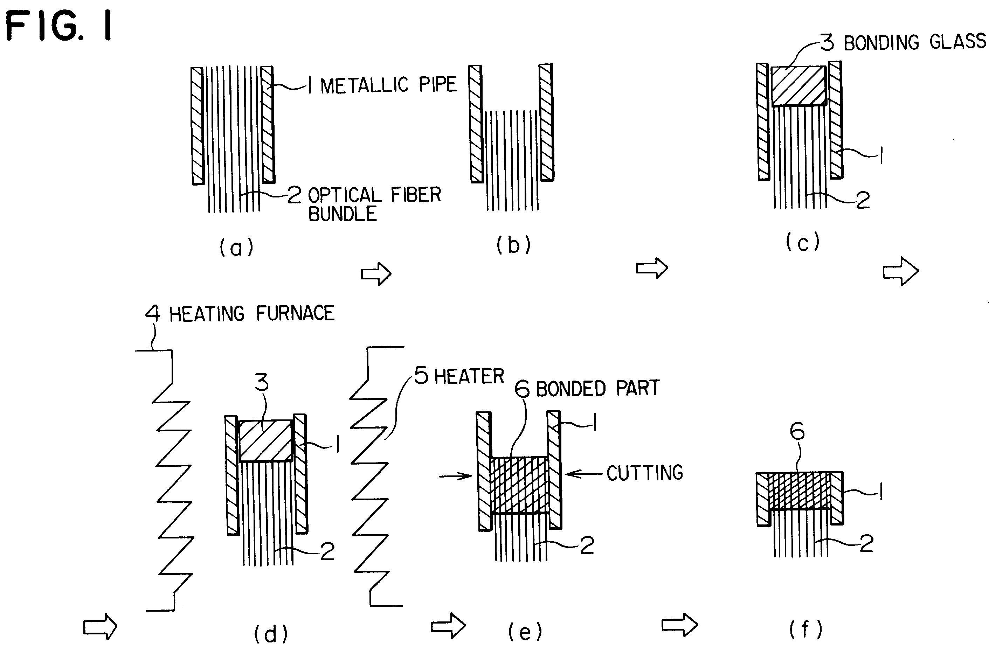

Referring to the accompanying drawings, the process of the present invention will now be illustrated in more detail. As shown in Fig. 1(a), a bundle of optical fiber filaments is inserted in a metallic pipe 1 and the end part of the optical fiber bundle outside the pipe 1 is cut to make the end surface even in a plane. Then, the optical fiber bundle 2 is withdrawn from the metallic pipe in a length sufficient to give sufficient space for the bonding glass 3 to be placed, as shown in Fig. 1(b). The bonding glass 3 is then placed on the fiber bundle as shown in Fig. 1(c) and the assembly is then set in a heating furnace 4, as shown in Fig. 1(d). The assembly is heated at a temperature of at most 700°C for a constant time by means of a heater 5 and the bonding glass 3 permeates through the optical fiber bundle 2 and is fusion-bonded. The furnace temperature is then lowered to a temperature of 500 to 700°C and maintained for a constant time, thereby crystallizing the bonding glass permeated through the optical fiber bundle. After this crystallization treatment, the assembly is gradually cooled to a further lower temperature, e.g. about 200°C and taken out of the heating part. As shown in Fig. 1(e), the fixed part of the optical fiber bundle, fixed by the resulting bonded part 6, is partially cut at the arrow and the cut surface is optically polished to obtain an optical guide rod as shown in Fig. 1(f).

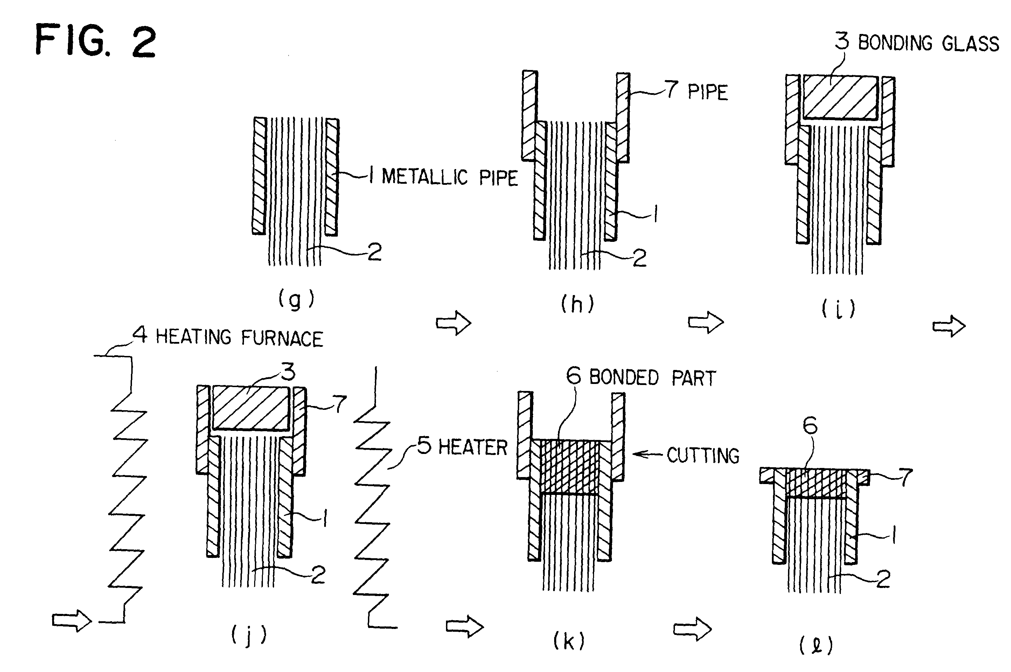

In Fig. 2, there is shown another production process of the present invention, in which (g) shows the same state as (a) of Fig. 1. As shown in Fig. 2(h), the metallic pipe 1, filled with the bundle of the optical fiber filaments, is covered with a metallic pipe 7 which is a size larger than the metallic pipe 1 and fixed to maintain a length sufficient within which to place the bonding glass 3. As shown in Fig. 2(i), the bonding glass is placed on the upper part and then subjected to steps (j) and (l) corresponding to steps of (d) to (f) to obtain an optical guide rod. According to the process of Fig. 2, cutting of the periphery of the optical fiber bundle can be avoided and accordingly, an optical guide rod having even better light transmission can be obtained.

The following examples are given in order to illustrate the present invention in detail without limiting the scope of the invention.

### Example 1

Optical fiber filaments each consisting of a core having a composition of 34 weight % of SiO₂, 18 weight % of B₂O₃, 34 weight % of BaO and the balance of other incidental micro amount components, a refractive index (nd) of 1.603, a glass softening temperature (Ts) of 750°C and a glass transition temperature (Tg) of 623°C, and a clad part having a composition of 57 weight % of SiO₂, 19 weight % of B₂O₃, 5 weight % of Al₂O₃ and the balance of other incidental micro amount components, a refractive index (nd) of 1.510, a glass softening temperature (Ts) of 739°C and a glass transition temperature (Tg) of 559°C were bundled, inserted, as a bundle 2, into a metal pipe 1 consisting of YEF 29-17 (Trade name, manufactured by Hitachi Kinkozu KK, Fe-Ni-Co type alloy, expansion coefficient [α] 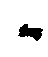 50 x 10⁻⁷) and the end part of the optical fiber bundle outside the pipe 1 was cut to make the end surface even in a plane. As shown in Fig. 1(b), the arranged bundle 2 was withdrawn from the pipe, a bonding glass 3 having the composition and charactistic values as shown in Table 1 was inserted in the upper part of the pipe (Fig. 1(c)) and set in a heating furnace 4 as shown in Fig. 1(d). The assembly was heated at 700°C for 1 hour by means of a heater 5 to permeate the bonding glass through the optical fiber bundle 2 and fusion-bonded. The furnace temperature was then lowered to a temperature of 500 to 600°C and maintained for about 5 hours, thereby crystallizing the bonding glass permeated through the optical fiber bundle. After this crystallization treatment, the assembly was gradually cooled to about 200°C and taken out of the heating part. The fixed part of the optical fiber bundle, fixed by the resulting bonded part 6, was partially cut at the bonded part and the cut surface was optically polished to obtain an optical guide rod as shown in Fig. 1(e) to (f).

The thus prepared optical guide rod of the optical fiber bundle had an end structure excellent in gas tightness as well as heat resistance up to 500°C.

| Composition | Sample No. | | | | | | |
|---|---|---|---|---|---|---|---|
| | 1 | 2 | 3 | 4 | 5 | 6 | 7 |
| TeO₂ | 25.0 | 25.0 | 25.0 | 20.0 | 30.0 | 27.0 | 25.0 |
| Bi₂O₃ | 12.0 | 25.0 | 25.0 | 30.0 | 20.0 | 15.0 | 18.5 |
| GeO₂ | 18.0 | 18.0 | 18.0 | 18.0 | 18.0 | 23.0 | 18.0 |
| PbO | 35.0 | 24.0 | 17.0 | 27.0 | 20.0 | 15.0 | 28.5 |
| La₂O₃ | - | - | - | 5.0 | 12.0 | - | 5.0 |
| Nb₂O₅ | 10.0 | 8.0 | 15.0 | - | - | 20.0 | 5.0 |

| Sag Temperature | | | | | | | |
|---|---|---|---|---|---|---|---|
| At (°C) | 401 | 405 | 410 | 403 | 413 | 407 | 427 |

### Example 2

Using an optical fiber bundle having the same properties as that in Example 1, an optical guide rod was prepared according to the process of the present invention as shown in Fig. 2. The optical fiber bundle ((g) of Fig. 2) prepared in a manner similar to Example 1 was inserted and fixed in a metallic pipe of a large size ((h) of Fig. 2) and a bonding glass 3 was placed on the upper part of the fiber bundle ((i) of Fig. 2), followed by treatment in a manner similar to Example 1 to obtain an optical guide rod.

The thus prepared optical guide rod of the optical fiber bundle had an end structure excellent in gas tightness as well as heat resistance up to 500°C. Since snapping of filaments at the periphery of the optical fiber bundle is suppressed by this process of the present invention, there can be obtained optical guide rods even better in light transmission than those of Example 1.

As is evident from the foregoing illustrations and examples of the present invention, a bonding glass is used for fixing the end of an optical fiber bundle and crystallized to improve heat resistance in the present invention, thereby obtaining a high temperature heat resistance up to 500°C, and the end part is excellent in gas tightness and free from gas generation. Therefore, according to the present invention, it is possible to produce an optical guide rod of an optical fiber bundle having high heat resistance and vacuum resistance, which can be applied to uses necessitating heat resistance and vacuum resistance.

## Claims

1. A process for the production of an optical fiber bundle which comprises making optical fiber filaments each having a core part and a clad part into a bundle and fusing a bonding glass on to the end of the bundle characterized in that said optical fiber filaments consist of a glass composition having a glass transition temperature (Tg) exceeding 500°C and a glass softening temperature (Ts) exceeding 700°C, and said bonding glass has a sag temperature (At) of at least 400°C, the bonding glass being fusion-bonded at a temperature of at most 700°C and the fusion-bonded bonding glass being subjected to a crystallization treatment at a temperature of 500 to 700°C.

2. A process as claimed in claim 1 wherein the fusion-bonding with a bonding glass is carried out by placing a bonding glass on the upper part of the upward projecting end of the optical fiber bundle and heating the bonding glass so as to permeate and fusion-bond the optical fiber bundle with the bonding glass.

3. A process as claimed in claim 1 or claim 2 wherein the bonding glass has a glass composition comprising 20 to 30 weight % of TeO₂, 12 to 30 weight % of Bi₂O₃, 13 to 23 weight % of GeO₂, 15 to 35 weight % of PbO, 0 to 12 weight % of La₂O₃ and 0 to 20 weight % of Nb₂O₅, provided that the sum of the amounts of La₂O₃ and Nb₂O₅ is in the range of 5.0 to 20.0 weight %, in which a part of the above described components can be replaced by at least one oxide component selected from Li, Na, K, Cs, Mg, Ca, Zn, Sr, Ba, Ti, Y, Zr, Ga, In, Sn, Sb, Tl, As, Al, Gd, Yb, Ta, W and P oxides in such a range that the glass composition is fusion-bonded at a temperature of at most 700°C and well crystallized at a temperature of 500 to 700°C, and has a glass sag temperature (At) of at least 400°C.

4. A process as claimed in claim 1 or claim 2 wherein the bonding glass consists of a glass selected from glasses of SiO₂ type, SiO₂-B₂O₃ type, GeO₂ type and P₂O₅ type.

5. A process as claimed in claim 4, wherein the glass further contains a modifying oxide.

## Patentansprüche

1. Verfahren zur Herstellung eines optischen Faserbündels, bei dem man Filamente der optischen Faser, die jeweils einen Kern und eine Umhüllung aufweisen, zu einem Bündel vereinigt und ein Verbundglas am Ende des Bündels aufschmilzt, dadurch gekennzeichnet, daß die Filamente der optischen Faser aus einer Glaszusammensetzung mit einer Glasphasenübergangstemperatur (Tg) oberhalb von 500 °C und einer Glaserweichungstemperatur (Ts) oberhalb von 700 °C bestehen und daß das Verbundglas eine sag-Temperatur (At) von mindestens 400 °C besitzt, wobei das Verbundglas bei Temperaturen von maximal 700 °C schmelzgebunden und das schmelzgebundene Verbundglas bei Temperaturen von 500 bis 700 °C einer Kristallisationsbehandlung unterworfen wird.

2. Verfahren gemäß Anspruch 1, bei dem die Schmelzbindung mit dem Verbundglas erfolgt, indem man das Verbundglas auf dem oberen Teil des nach oben weisenden Endes des Bündels aus optischen Fasern anordnet und zum Permeiren und Schmelzverbinden des optischen Faserbündels mit dem Verbundglas erwärmt.

3. Verfahren gemäß Anspruch 1 oder 2, bei dem das Verbundglas eine Glaszusammensetzung aufweist, die 20 bis 30 Gew.-% TeO₂, 12 bis 30 Gew.-% Bi₂O₃, 13 - 23 Gew.-% GeO₂, 15 - 35 Gew.-% PbO, 0 - 12 Gew.-% La₂O₃ und 0 - 20 Gew.-% Nb₂O₅ mit der Maßgabe umfaßt, daß die Summe der La₂O₃- und Nb₂O₅-Mengen im Bereich von 5,0 bis 20.0 Gew.-% liegt, wobei ein Teil der oben beschriebenen Komponenten durch mindestens eine aus den Oxiden von Li, Na, K, Cs, Mg, Ca, Zn, Sr, Ba, Ti, Y, Zr, Ga, In, Sn, Sb, Tl, As, Al, Gd, Yb, Ta, W und P ausgewählte Oxidkomponente in einem solchen Bereich ersetzt werden kann, daß sich die Glaszusammensetzung bei einer Temperatur von maximal 700 °C schmelzbinden läßt, bei Temperaturen von 500 bis 700 °C gut kristallisiert und eine sag-Temperatur des Glases (At) von mindestens 400 °C aufweist.

4. Verfahren gemäß Anspruch 1 oder 2, bei dem das Verbundglas aus aus Gläsern vom SiO₂-Typ, SiO₂-B₂O₃-Typ, GeO₂-Typ und P₂O₅-Typ bestehenden Gruppe gewählt ist.

5. Verfahren gemäß Anspruch 4, bei dem das Glas zusätzlich ein modifizierendes Oxid enthält.

## Revendications

1. Procédé de production d'un faisceau de fibres optiques comprenant la fabrication de filaments de fibres optiques ayant chacun une partie centrale et une partie de revêtement dans un faisceau et la fusion d'un verre de liaison sur l'extrémité du faisceau caractérisé en ce que lesdits filaments de fibres optiques sont constitués d'une composition de verre ayant une température de transition vitreuse (Tg) supérieure à 500°C et une température de ramollissement de verre (Ts) supérieure à 700°C, et en ce que ledit verre de liaison a une température d'affaissement (At) au moins égale à 400°C, le verre de liaison étant lié par fusion à une température au plus égale à 700°C et le verre de liaison lié par fusion étant soumis à un traitement de cristallisation à une température de 500 à 700°C.

2. Procédé selon la revendication 1 dans lequel la liaison par fusion avec un verre de liaison est effectuée en plaçant un verre de liaison sur la partie supérieure de l'extrémité faisant saillie vers le haut du faisceau de fibres optiques et en chauffant le verre de liaison de façon à pénétrer et lier par fusion le faisceau de fibres optiques avec le verre de liaison.

3. Procédé selon la revendication 1 ou la revendication 2 dans lequel le verre de liaison a une composition de verre comprenant 20 à 30 % en poids de TeO₂, 12 à 30 % en poids de Bi₂O₃, 13 à 23 % en poids de GeO₂, 15 à 35 % en poids de PbO, 0 à 12 % en poids de La₂O₃ et 0 à 20 % en poids de Nb₂O₅, à condition que la somme des quantités de La₂O₃ et de Nb₂O₅ soient dans l'intervalle de 5,0 à 20,0 % en poids, dans lequel une partie des composants décrits ci-dessus peut être remplacée par au moins un composant oxyde choisi parmi les oxydes de Li, Na, K, Cs, Mg, Ca, Zn, Sr, Ba, Ti, Y, Zr, Ga, In, Sn, Sb, Tl, As, Al, Gd, Yb, Ta, W et P dans un intervalle tel que la composition de verre soit liée par fusion à une température au plus égale à 700°C et soit bien cristallisée à une température de 500 à 700°C, et ait une température d'affaissement (At) au moins égale à 400°C.

4. Procédé selon la revendication 1 ou la revendication 2 dans lequel le verre de liaison est constitué d'un verre choisi parmi les verres du type SiO₂, du type SiO₂-B₂O₃, du type GeO₂ et du type P₂O₅.

5. Procédé selon la revendication 4 dans lequel le verre contient en outre un oxyde modifiant.
